# EUROPEAN PATENT APPLICATION

(11) **EP 2 784 579 A1**
(43) Date of publication of application: **01.10.2014**
(21) Application number: 14159780.7
(22) Date of filing: 14.03.2014
(51) Int. Cl.: G03B 21/14

(54) **Head-up display device and display method of head-up display device**

(30) Priority: 29.03.2013 JP 2013071453
(71) Applicant: Funai Electric Co., Ltd., Daito city Osaka 574-0013 (JP)
(72) Inventor: Hashimoto, Masahiro, Osaka Osaka 574-0013 (JP)
(74) Representative: Osha Liang SARL

(57) **Abstract**

A head-up display device (100, 100a) comprising a projection unit ((1) configured to project predetermined information on a transparent display panel (2, 2a) by superimposing on a background (400) that is viewed by a user through the transparent display panel (2, 2a) placed in front of a line of sight of the user; and a controller (17) configured to control a display (300) of the predetermined information while changing a display color of the predetermined information sequentially independent of a color of the background (400).

## Description

The present invention relates to a head-up display device and display method of the head-up display device.

### Background Art

A projector provided with a projection unit for projecting predetermined information such as an image or text is conventionally known (for example, refer to Japanese Unexamined Patent Application Publication No. 2012-215755).

Japanese Unexamined Patent Application Publication No. 2012-215755 discloses a projector provided with a plurality of light sources and a projection lens (projection unit) that projects predetermined information such as images and text onto a screen by light emitted from the plurality of light sources. This projector is configured so as to project predetermined information with light of a specific color that is set in advance and configured by a combination of lights in a plurality of colors emitted from the plurality of light sources.

Also, a head-up display device provided with a transparent display panel in front of the line of sight of a user that projects predetermined information superimposed on the background that is visible by the user via the transparent display panel is conventionally known as an application example of a projector.

### [Patent Literature]

However, in such a head-up display device as that described above, the background viewed by the user via the transparent display panel changes, and the predetermined information is projected by superimposing on the changing background. Therefore, when the predetermined information is projected with the specific color that has been set in advance as in the projector described in Japanese Unexamined Patent Application Publication No. 2012-215755 , the color of the background and the display color (specific color) of the predetermined information may be a similar color (like color). It is presumable in such case that there may be a problem where the predetermined information is difficult to be visually recognized.

### Summary of the Invention

One or more embodiments of the present invention is to provide a head-up display device and a display method of the head-up display device that can make the predetermined information to be visually recognized to the user reliably when the color of the background changes.

According to one or more embodiments of the present invention, a head-up display device may comprise a projection unit or the like that projects predetermined information on a transparent display panel by superimposing on a background that is viewed by a user through the transparent display panel placed in front of a line of sight of the user; and a controller or the like that controls a display of the predetermined information while changing a display color of the predetermined information sequentially independent of a color of the background. The head-up display device according to one or more embodiments of the present invention is not limited to those being installed in transportation equipment such as automobiles, aircrafts and the like, but is a broad concept that also includes those which can be placed in front of the line of sight of a user by wearing on the head of a user. Further, in one or more embodiments of the present invention, the transparent display panel is not limited to a transparent display panel with a panel shape, but is a broad concept that also includes a windshield of transportation equipment such as automobiles, aircrafts, and the like. Further, in one or more embodiments of the present invention, transparency is not limited to transparency but is a broad concept that also includes semitransparency.

In the head-up display device according to one or more embodiments of the present invention, the display color of the predetermined information against changing background color may be a color easy to visually recognize in any timing by controlling the display of the predetermined information while changing the display color of the predetermined information sequentially regardless of the color of the background described above, and therefore, the user can reliably visually recognize the predetermined information. As a result, for example, unlike the case of displaying predetermined information in the specific (constant) displaying color all times, the user can visually recognize the predetermined information reliably even when the color of the background changes.

In the head-up display device according to one or more embodiments, the to the controller may control the display of the predetermined information while changing the display color of the predetermined information sequentially in a continuous or in a stepwise manner. According to the configuration in this manner, for example, the display color may be changed smoothly at a smaller change rate, so the display color of the predetermined information against the color of the background can be changed in a display color that is easier to view. Further, for example, when the display color of the predetermined information is sequentially changed in a stepwise manner, because there are fewer display colors than when continuously changing the display color, the display color of the predetermined information can be changed with a simpler configuration. The head-up display device according to one or more embodiments may comprise a plurality of light sources that emit lights projected on the transparent display panel by the projection unit, and the controller is configured so as to sequentially change the display color of the predetermined information regardless of the color of the background by using all usable light sources among the plurality of light sources. According to the configuration in this manner, for example, the display color of the predetermined information can be changed in a wider color range by using all usable light sources, and therefore, the display color of the predetermined information can be changed to be more visually recognizable against the changing color of the background.

In the head-up display device according to one or more embodiments, the controller may control the display of the predetermined color in a selected specific display color when the specific display color is selected by the user while changing the display color of the predetermined color sequentially. According to the configuration in this manner, for example, the user can freely select a specific display color that is easier to view from the sequentially changing display colors to continuously display the predetermined information in the specified color against the color of the background, and therefore, the predetermined information can be displayed continuously in the display color suitable for the user to improve the visibility.

In the head-up display device according to one or more embodiments, the controller may initiate control to sequentially change the display color of the predetermined information regardless of the color of the background based on the detection of the change of the brightness of the background viewed by the user via the transparent display panel. According to the configuration in this manner, for example, even when the predetermined information becomes difficult to view due to the change of the brightness of the background, the controller automatically initiates control to change the display color of the predetermined information, and therefore, a prolonged state of the problematic view of the predetermined information is easily prevented.

The head-up display device according to one or more embodiments may comprise a plurality of light sources that emit lights projected on the transparent display panel by the projection unit, and the controller is configured so as to initiate control to sequentially change the display color of the predetermined information regardless of the color of the background when any one light source among the plurality of the light sources is no longer able to emit the desired light. According to the configuration in this manner, for example, even when the predetermined information becomes difficult to view as a result of when any one of the plurality of light sources is no longer able to emit the desired light due to degradation or failure, the controller automatically initiates control to change the display color of the predetermined information, and therefore, a prolonged state of the problematic view of the predetermined information is easily prevented. Furthermore, for example, when any one light source is no longer able to emit the desired light, the user can visually recognize that one of the light sources is no longer able to emit the desired light due to degradation or failure by the controller initiating control to change the display color of the predetermined information.

A method for displaying the head-up display device according to one or more embodiments may comprise projecting the predetermined information on the transparent display panel by superimposing on a background that is visible to a user via the transparent panel placed in front of the line of sight of the user, and displaying the predetermined information while sequentially changing the display color of the predetermined information regardless of the color of the background. The head-up display device according to one or more embodiments of the present invention is not limited those being installed in transportation equipment such as automobiles, aircrafts and the like, but is a broad concept that also includes those which can be placed in front of the line of sight of a user by wearing on the head of a user. Further, according to one or more embodiments of the present invention, the transparent display panel is not limited to a transparent display panel with a panel shape, but is a broad concept that also includes a windshield of transportation equipment such as automobiles, aircrafts, and the like. Further, according to one or more embodiments of the present invention, transparent is not limited to transparent but is a broad concept that also includes semitransparent.

In the display method of the head-up display device according to one or more embodiments, the user can visually recognize the predetermined information more reliably because the display color of the predetermined information changes sequentially against the changing background color in any timing by providing the step that displays the predetermined information while changing the display color of the predetermined information sequentially regardless of the color of the background as described above. As a result, for example, unlike when displaying the predetermined information in a specific (constant) display color at all times, the predetermined information can be visually recognized more reliably to the user even when the color of the background changes.

According to one or more embodiments, the display method of a head-up display device may comprise controlling the displaying of the predetermined information while changing the display color of the predetermined information in a continuous manner.

According to one or more embodiments, the display method of a head-up display device may comprise changing the display color of the predetermined information sequentially independent of the background color using one of a plurality of light sources of the head-up display device.

According to one or more embodiments, the display method of a head-up display device may comprise controlling the display of the predetermined information in a selected specific display color when the display color is selected by the user while changing the display color of the predetermined information sequentially.

According to one or more embodiments, the display method of a head-up display device may comprise initiating control to change the display color of the predetermined information sequentially independent of the color of the background based on a detection of change in a brightness of the background viewed by the user through the transparent display panel.

According to one or more embodiments, the display method of a head-up display device may comprise initiating control to change the display color of the predetermined information sequentially independent of the background color when one of a plurality of light sources of the head-up display device is no longer able to emit the desired light.

According to one or more embodiments present invention, the predetermined information can be visually recognized more reliably to the user as described above even when the color of the background changes.

### Brief Description of the Drawings

FIG. 1 is a diagram illustrating a use state of a HUD device according to one or more embodiments of the present invention;
FIG. 2 is a diagram illustrating predetermined information projected on a windshield of the HUD device according to one or more embodiments of a first example of the present invention;
FIG. 3 is a block diagram illustrating a configuration of the HUD device according to the one or more embodiments of the present invention;
FIG. 4 is a diagram illustrating a cycle of the display color change in the HUD device according to one or more embodiments of the first example of the present invention;
FIG. 5 is a flowchart describing a display color change process of the HUD device according to one or more embodiments of the first example of the present invention;
FIG. 6 is a flowchart describing a display color change process of the HUD device according to one or more embodiments of a second example of the present invention;
FIG. 7 is a diagram illustrating a HUD device according to a first modified example of one or more embodiments of the first example of the present invention; and
FIG. 8 is a diagram illustrating a cycle of the display color change in the HUD device according to the second modified example of the one or more embodiments of the first example of the present invention.

### [Detailed Description of Embodiments of the Invention]

Embodiments of the present invention are described below with reference to the drawings.

### (First Example)

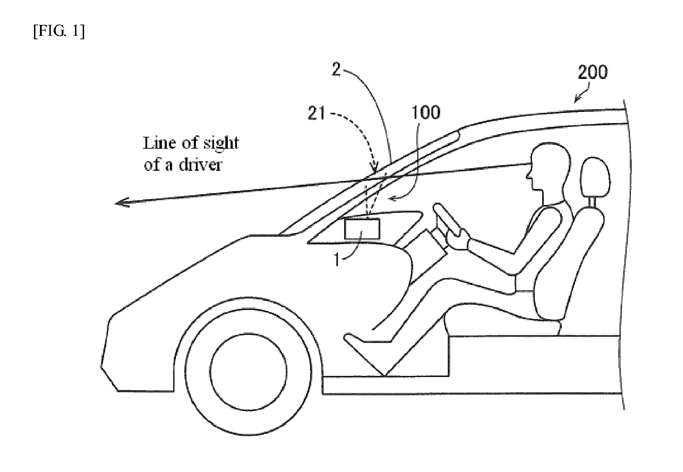

A configuration of a HUD (head-up display) device 100 according to one or more embodiments of the present invention will be described with reference to FIGS. 1 to 4.

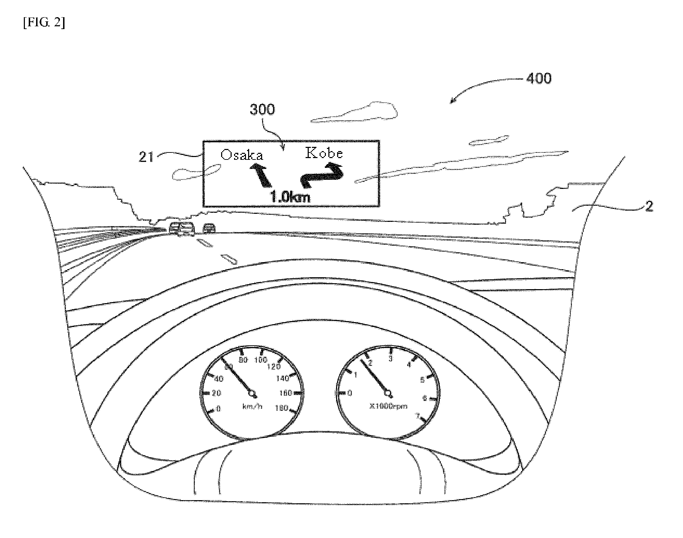

The HUD device 100 according to one or more embodiments of the present invention may be built in (mounted) to a vehicle 200 as illustrated in FIG. 1. Further, the HUD device 100 may include a projector unit 1 that projects information. The HUD device 100 may be configured, as illustrated in FIG. 2, so that predetermined information 300 given to inform a user of route information according to a car navigation system, fuel consumption information of the vehicle, and the like, can be displayed on a windshield 2 disposed in front of the line of sight of the user. Furthermore, the predetermined information 300 may be displayed in the display region 21 of the windshield 2, and set in a default color (for example, bluish green) in the initial state. Moreover, the HUD device 100 may be differed from a projector device that projects on a stationary screen, and because the predetermined information 300 may be projected on the display region 21 of the windshield 2, it has a feature that the color of the background 400 changes frequently. The windshield 2 is an example of a "transparent display panel" according to one or more embodiments of the present invention.

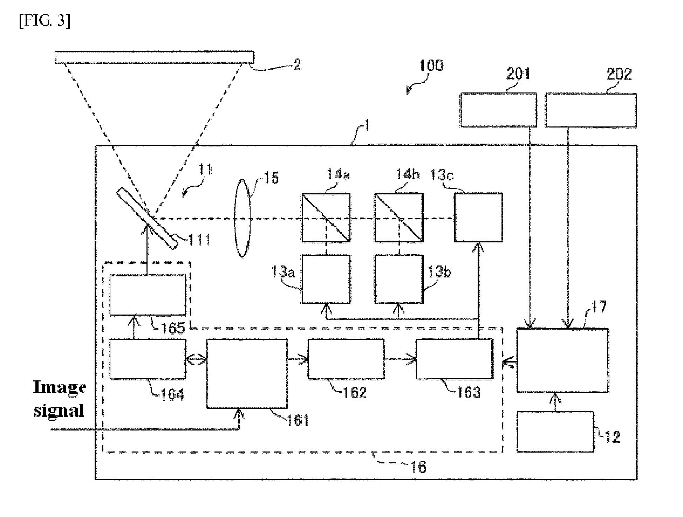

In addition, the HUD device 100 (projector unit 1) according to one or more embodiments of the present invention may be provided, as illustrated in FIG. 3, with a laser light scanner 11 that projects the predetermined information 300 on the windshield 2 by superimposing on the background 400, an operation part 12 that accepts an operation instruction from the user for the projector unit 1, three (blue (B), green (G), and red (R)) laser light sources 13a, 13b, and 13c, two beam splitters 14a and 14b, a lens 15, a display controller 16, and a main CPU 17 that controls each part of the projector unit 1. The laser light scanner 11 is an example of the "projection unit" according to one or more embodiments of the present invention, and the laser light sources 13a, 13b, and 13c are respectively an example of the "light source" according to one or more embodiments of the present invention. Further, the main CPU 17 is an example of the "controller" according to one or more embodiments of the present invention.

The laser light scanner 11 according to one or more embodiments of the present invention may include an MEMS (Micro Electro Mechanical System) mirror 111 and may be configured so that the lights emitted from the three laser light sources 13a, 13b, and 13c are scanned by the MEMS mirror 111. Thus, the lights emitted from the three laser light sources 13a, 13b, and 13c may be projected on the display region 21 of the windshield 2. The operation part 12 may be provided in order to accept various operation instructions from the user for the projector unit 1 such as an operation to turn on the power source of the HUD device 100 (projector unit 1), an operation to change a display color of the predetermined information 300 projected on the windshield 2, and the like.

The three laser light sources 13a, 13b, and 13c according to one or more embodiments of the present invention may be configured so as to emit blue laser light, green laser light, and red laser light, respectively. The blue laser light emitted from the laser light source 13a may irradiate onto the MEMS mirror 111 passing through the beam splitter 14a and the lens 15. The green laser light and the red laser light emitted from the laser light sources 13b and 13c, respectively, may pass through the beam splitter 14b, and also passing through the beam splitter 14a and the lens 15 thereafter, before being irradiated onto the MEMS mirror 111.

The display controller 16 according to one or more embodiments of the present invention may include an image processor 161, a light source controller 162, an LD (laser diode) driver 163, a mirror controller 164, and a mirror driver 165. The projector unit 1 may be configured so as to output the predetermined information 300 based on an image signal (for example, image signal sent from the car navigation (image signal that relates to the route information)) input to the image processor 161. The light source controller 162 may be configured to be able to drive the three laser light sources 13a, 13b, and 13c mutually independently via the LD driver 163. More specifically, the light source controller 162 may be configured to control the LD driver 163 so that laser lights that correspond to each pixel within the display region 21 are irradiated from the three laser light sources 13a to 13c. The mirror controller 164 may be configured to be able to drive the MEMS mirror 111 of the laser light scanning unit 11 via the mirror driver 165.

According to one or more embodiments of the present invention, the main CPU 17 may be configured as will be described later so as to control the display of the predetermined information 300 on the display region 21 while changing the display color of the predetermined information 300 sequentially regardless of the color (background color) of the background 400 that is visibly recognized by the user via the windshield 2 when there is an instruction by the user or when brightness of the background 400 changes. More specifically, the main CPU 17 may be configured so as to control the display color of the predetermined information 300 to be sequentially changed continuously regardless of the color (background color) of the background 400. The main CPU 17 may control the display of the predetermined information 300 by gradually changing the display color continuously by gradation. At that time, the main CPU 17 may be configured so as to change the display color of the predetermined information 300 sequentially by using all usable laser light sources of the three laser light sources 13a, 13b, and 13c.

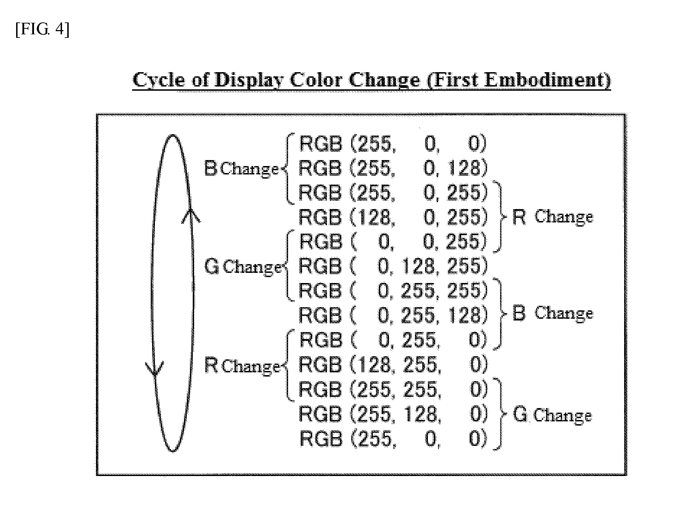

More specifically, when using the three light sources 13a, 13b, and 13c, the main CPU 17, as illustrated, for example, in FIG. 4, may maintain the gradation of one laser light source at either the maximum or minimum value, and also change the gradation of the other laser light sources continuously and sequentially by one gradation at a time. More particularly, the main CPU 17 may change the gradation of the blue (B) laser light source 13a from the minimum value (0 gradation) to the maximum value (255 gradation) continuously and sequentially one gradation at a time while having the gradation of the red (R) laser light source 13c of the RGB to be the maximum value (255 gradation) and also having the green (G) laser light source 13b to be the minimum value (0 gradation). Subsequently, the main CPU 17 may change the gradation of the red (R) laser light source 13c from the maximum value (255 gradation) to the minimum value (0 gradation) continuously and sequentially one gradation at a time while maintaining the gradation of the green (G) laser light source 13b to be the minimum value (0 gradation) and also maintaining the blue (B) laser light source 13a to be the maximum value (255 gradation). The main CPU 17 may be configured as described above so as to gradually change the display color of the predetermined information 300 continuously by sequentially changing the gradation of the laser light source corresponding to each of the RGB in a cycle as illustrated in FIG. 4.

Further, the main CPU 17 according to one or more embodiments of the present invention may be configured so as to display the predetermined information 300 in a selected specific color when the user has selected the specific display color while the display color of the predetermined information 300 is changed sequentially. The user can select a desired display color (specific display color) by operating the operation part 12 at the timing of being changed to the desired display color while the display color of the predetermined information 300 is changed sequentially.

Furthermore, the main CPU 17 according to one or more embodiments of the present invention may be configured so as to detect a change in the brightness of the background 400 viewed by the user via the windshield 2 based on the condition of the function operated according to the ambient conditions of a vehicle 200 such as weather, brightness, and the like. More specifically, the main CPU 17 may be configured so as to detect a change in the brightness of the background 400 based on a switching operation to an on or off state of the headlights 202 and a wiper 201 of the vehicle 200. For example, when the wiper 201 is switched from the off state to an on state, the main CPU 17 may determine that the brightness of the background 400 has changed due to a high possibility of starting to rain.

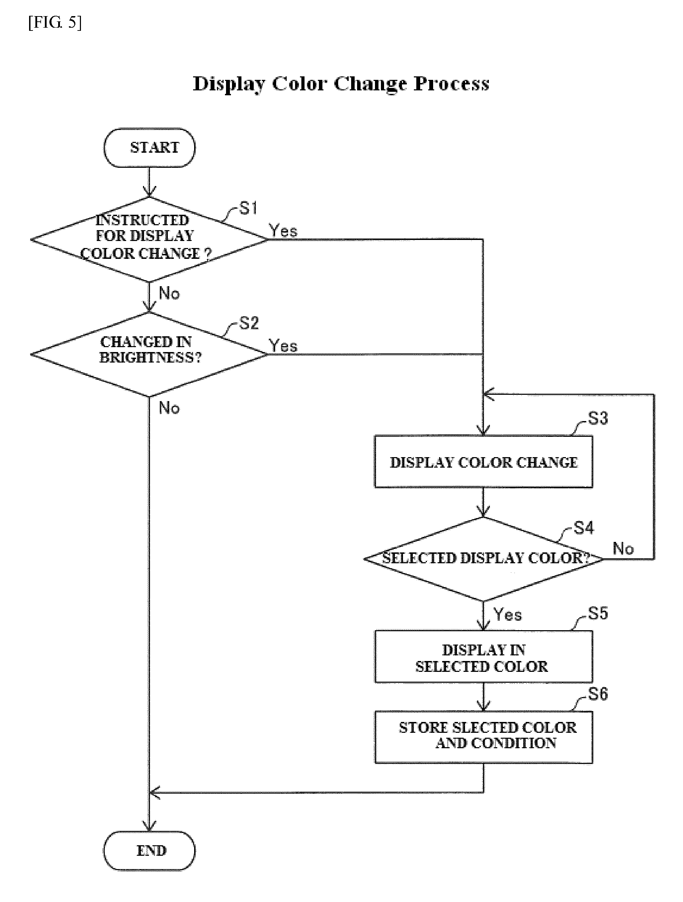

Next, a description of the display color change process performed by the main CPU 17 of the HUD device 100 according to one or more embodiments of the present invention will be given in reference to, for example, FIG. 5.

First, the main CPU 17 according to one or more embodiments of the present invention may determine whether or not the user has given an instruction to change the display color via the operation part 12 in step S1. When there is no instruction given from the user, the main CPU 17 may determine whether or not the brightness of the background 400 has changed based on the switching operation into an on or off state of the headlights 202 and the wiper 201 in step S2. More specifically, in step 6 as will be described later, the main CPU 17 may detect whether or not the stored states of the wiper 201 and headlights 202 has changed, and if there is a change in their states, it may determine that the brightness of the background 400 has changed.

When there is an instruction to change the display color by the user, or when there is a change in the brightness of the background 400, the main CPU 17 may control the display color of the predetermined information 300 sequentially in step S3 regardless of the color (background color) of the background 400. More specifically, the main CPU 17 may display the predetermined information 300 while sequentially and continuously changing the display color of the predetermined information 300 regardless of the color (background color) of the background 400 by changing the gradation of each laser light source continuously in the cycle illustrated in FIG. 4. Subsequently, the main CPU 17 may determine whether or not a specific display color is selected by the user, and repeats the determination until the display color is selected in step S4. Unless the specific display color is selected by the user, the display color of the predetermined information 300 may change continuously in the cycle illustrated in, for example, FIG. 4. Therefore, the user can continuously change the display color of the predetermined information 300 by not selecting a specific display color. When the color (background color) of the background 400 changes frequently, the visibility may be improved by continuously changing the display color of the predetermined information 300 instead of fixing the display color by selecting the specific display color.

When the user selects a specific display color via the operation part 12, the main CPU 17 according to one or more embodiments of the present invention may display the predetermined information 300 in the selected specific display color in step S5. Accordingly, the predetermined information 300 is displayed in the specific display color in a fixed state. The main CPU 17 may store the information of the selected specific display color and the information of the on or off state of the wiper 201 and the headlights 202 at the time when the user selected the specific display color in a storage region of the main CPU 17 to finish the display color change process in step S6.

The main CPU 17 according to one or more embodiments of the present invention may run the display color change process described above continuously when the HUD device 100 is running. Further, when an engine is re-started after the engine of the vehicle 200 was stopped, the display color of the predetermined information 300 may become the same state as the one immediately before the engine was stopped. That is, when the user stops the engine while the specific display color has not been selected, when the engine is re-started, the display color of the predetermine information 300 may be in the state of changing continuously and sequentially. On the other hand, when the user stops the engine while the specific display color has been selected, the display color of the predetermined information 300 may become the specific display color selected by user when the engine is re-started.

According to one or more embodiments of the first example of the present invention, the user can visually recognize the predetermined information 300 more reliably because the display color of the predetermined information 300 changes sequentially relative to the color of the changing background 400 to become a display color easy to view in any timing by controlling the display of the predetermined information 300 while sequentially changing the predetermined information 300 regardless of the color (background color) of the background 400 by the main CPU 17. As a result, unlike when displaying the predetermined information 300 in a specific (constant) display color at all times, the predetermined information 300 can be visually recognized more reliably to the user even when the color of the background 400 changes. The predetermined information 300 displayed by the HUD device 100 may include route information by the car navigation, fuel consumption information, and the like, and therefore, the user is able to sufficiently obtain the necessary information by merely viewing at intervals of a few seconds (the timing for changing to a display color that is easy to view).

Further, according to one or more embodiments of the first example of the present invention, the main CPU 17 may be configured so as to control the display of the predetermined information 300 while sequentially changing the predetermined information 300 continuously as described above. Accordingly, the display color can be changed smoothly at a smaller change rate, so the display color of the predetermined information 300 can be changed to a display color that is easier to view against the color of the background 400.

Furthermore, according to one or more embodiments of the first example of the present invention, the main CPU 17 may be configured so as to change the display color of the predetermined information 300 sequentially regardless of the color of the background 400 by using all usable light sources among the three laser light sources 13a to 13c as described above. Accordingly, the display color of the predetermined information 300 can be changed in a wider color range by using all usable laser light sources, and therefore, the display color of the predetermined information 300 can be changed to be a display color that is more easily viewed against the changing color of the background 400.

Moreover, according to one or more embodiments of the first example of the present invention, the main CPU 17 may be configured so as to display the predetermined information 300 in a selected specific display color when the user selected the specific display color while the display color of the predetermined information 300 is changed sequentially as described above. Accordingly, the user can freely select a specific display color that is easier to view from the sequentially changing display colors to continuously display the predetermined information 300 in the specified color against the color of the background 400. Therefore, the predetermined information 300 can be displayed continuously in the display color suitable for the user to improve the visibility.

In addition, according to one or more embodiments of the first example of the present invention, the main CPU 17 is configured so as to initiate control to change the display color of the predetermined information 300 sequentially regardless of the color of the background 400 based on the detection of the brightness change of the background 400 as described above. Accordingly, even when the predetermined information 300 becomes difficult to view due to the change of the brightness of the background 400, the controller may automatically initiate control to change the display color of the predetermined information 300 by the main CPU 17. Therefore, a prolonged state of the problematic view of the predetermined information 300 may be easily prevented.

### (Second Example)

Next, a configuration of an HUD (head-up display) device 100 according one or more embodiments of another example of the present invention of the present invention will be described. Unlike the first example described above where the display color of the predetermined information 300 is changed when the user gives an instruction or there is a change in the brightness of the background 400, a configuration according to one or more embodiments of the second example of the present invention will be described where the display color of the predetermined information 300 is also changed when any one laser light source among the three laser light sources 13a, 13b, and 13c has degraded or failed in addition to when there has been an instruction given by the user or a change in the brightness of the background 400.

A main CPU 17 of the HUD device 100 according to one or more embodiments of the present invention may be configured so as to change the display color of the predetermined information 300 sequentially regardless of the color (background color) of the background 400 even when any one laser light source among the three laser light sources 13a, 13b, and 13c degrades or fails in addition to when there has been an instruction given by the user or a change in the brightness of the background 400. More specifically, the main CPU 17 may be configured to be able to detect any one of three laser light sources 13a, 13b, and 13c that is no longer able to emit the desired light due to degradation or failure. Then, the main CPU 17 may change the display color of the predetermined information 300 sequentially when any one light source among the three laser light sources 13a, 13b, and 13c is no longer able to emit the desired light. In this case, the main CPU 17 may be configured so as to change the display color of the predetermined information 300 sequentially by using the two usable laser light sources other than the laser light source that is no longer able to emit the desired light among the three laser light sources 13a, 13b, and 13c. Furthermore, the main CPU 17 has a function to determine an initial color when the display color of the predetermined information 300 is changed by the two laser light sources. More specifically, the main CPU 17 may be configured so as to determine that a color having the larger wavelength is prioritized as the initial color among the displayable colors by the two usable laser light sources and changes the display color of the predetermined information 300 sequentially from the determined initial color.

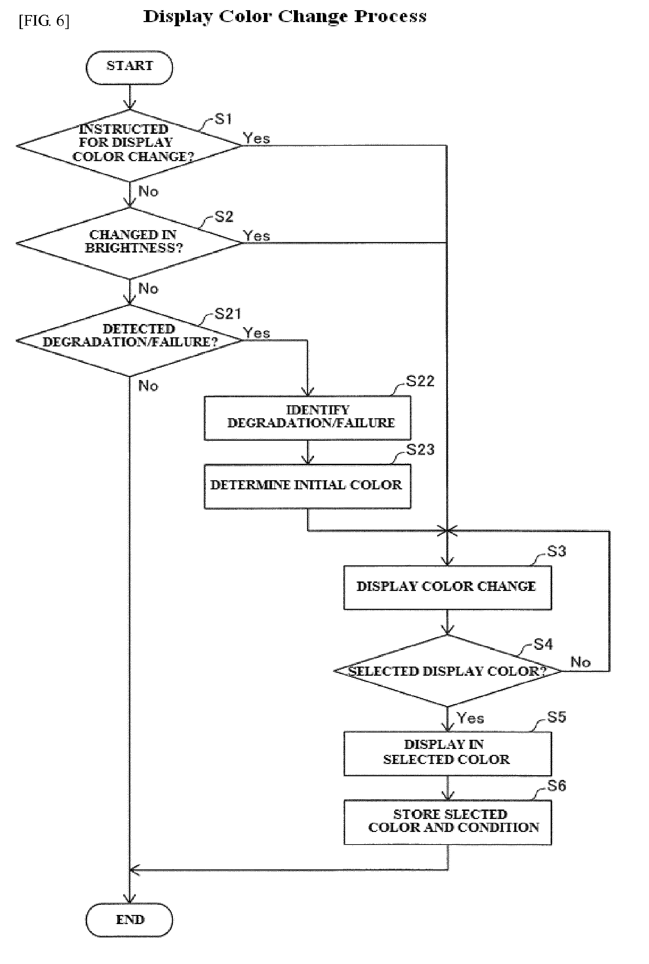

Next, a description of the display color change process performed by the main CPU 17 of the HUD device 100 according to one or more embodiments of the present invention will be given with reference to, for example, FIG. 6. Here, operations that are the same as the display color change process of the first example illustrated in, for example, FIG. 5 will be denoted by the same step number in FIG. 6, and descriptions thereof will be omitted.

When there is no change instruction given by the user and there is no change in the brightness of the background 400, the main CPU 17 may determine in step S21 whether or not any one laser light source among the three laser light sources 13a, 13b and 13c is no longer able to emit the desired light due to degradation or failure. When the three laser light sources 13a, 13b and 13c are all in good working condition (in a state able to emit the desired light), the main CPU 17 ends the display color change process as is. Conversely, when any one of the laser light source is no longer able to emit the desired light, the main CPU 17 may identify in step S22 which laser light source within the three laser light sources 13a, 13b, or 13c has degraded or failed.

Then, the main CPU 17, in step S23, may determine the color having the larger wavelength within the displayable colors as the initial color. More specifically, the wavelength is largest in the order of red (R), green (G), and blue (B), and therefore, the main CPU 17 may select the red color, which has the largest wavelength that can be displayed by the laser light source 13c and that corresponds to red (R), it be the initial color when the laser light source 13a that corresponds to blue (B) or the laser light source 13b that corresponds to green (G) has degraded or failed. Further, when the laser light source 13c that corresponds to red (R) has degraded or failed, the green color, which has the next larger wavelength after the red color that can be displayed by the laser light source 13b and that corresponds to green (G), may be selected to be the initial color. Determining the initial color in this manner may help prevent the initial color from being a color of a dark color system thereby suppressing the initial color from being one that is difficult to view.

Subsequently, in step S3, the main CPU 17 according to one or more embodiments of the present invention may change the display color of the predetermined information 300 sequentially from the determined initial color regardless of the color (background color) of the background 400 by using the two usable laser light sources. More specifically, the main CPU 17 may maintain the gradation of one laser light source at either value of the maximum value (255 gradation) or minimum value (0 gradation) from the determined initial color, and also to change the gradation of the other laser light source continuously and sequentially by one gradation at a time. Then, the main CPU 17 may end the display color change process by performing the operation of steps S4 to S6 in the same manner as in the first embodiment.

Other configurations of the second example are possible.

According to one or more embodiments of the second example of the present invention, the CPU 17 may be configured as described above so as to initiate control to change the display color of the predetermined information 300 sequentially regardless of the color (background color) of the background 400 when any one laser light source among the three laser light sources 13a to 13c is no longer able to emit the desired light. Accordingly, even when the predetermined information 300 becomes difficult to view as a result of when any one light source among the three laser light sources 13a to 13c is no longer able to emit the desired light due to degradation or failure, the main CPU 17 may automatically initiate control to change the display color of the predetermined information 300. Therefore, a prolonged state of the problematic view of the predetermined information 300 can be easily prevented. Furthermore, when any one light source is no longer able to emit the desired light, the user can visually recognize that one of the light sources is no longer able to emit the desired light due to degradation or failure by initiating control to change the display color of the predetermined information 300 by the main CPU 17.

Other advantageous effects of the second example may be similar to those of the first example.

The embodiments herein disclosed are examples on all points and should be considered as not restrictive. The scope of the present invention is indicated by the scope of the claims and not by the descriptions of the embodiments described above and furthermore includes all equivalent meanings of the scope of the claims and all modifications within the scope of the claims.

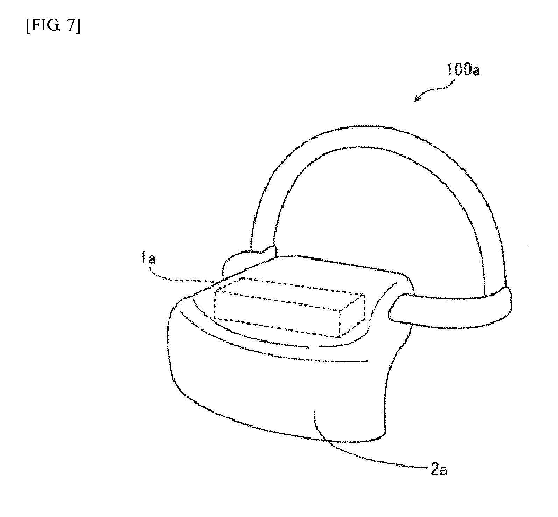

One or more embodiments of the present invention, as described above, are examples where the HUD (head-up display) device is installed in an automotive vehicle; however, the present invention is not restricted thereto. One or more embodiments of the present invention may be installed in transportation equipment other than automotive vehicles such as airplanes or the like. Further, as given in a modified example illustrated in FIG. 7, one or more embodiments of the present invention may be applied to an HUD device 100a that is able to be worn on the head of the user provided with a projector unit 1a and a transparent display panel 2a that are arranged in front of line of sight of the user.

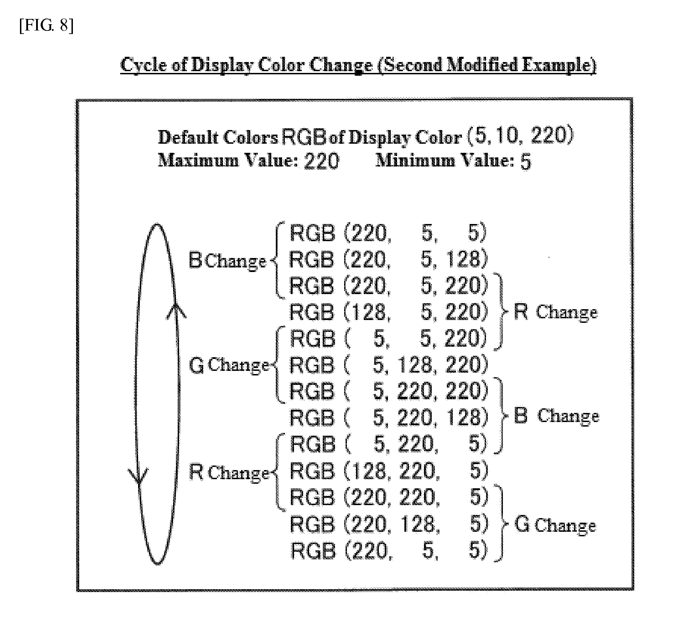

Furthermore, one or more embodiments of the present invention, as described above, describes how the display color of the predetermined information is changed gradually and continuously by sequentially changing the gradation of the laser light source corresponding to each of the RGB in a cycle as illustrated in, for example, FIG. 4; however, the present invention is not limited thereto. One or more embodiments of the present invention may change the display color of the predetermined information sequentially and gradually by sequentially changing the gradation of the laser light source corresponding to each of the RGB in a cycle of a second modified example illustrated in, for example, FIG. 8. The controller may set the maximum value and the minimum value among the values of the default colors RGB to an upper limit value and a lower limit value of the gradation respectively for changing the display color sequentially based on the default colors of the display color of the predetermined information. For example, as illustrated in FIG. 8, when the default colors of the display color are RGB (5, 10, 220), the controller sets the maximum value 220 (gradation of B) and the minimum value 5 (gradation of R) among the values of RGB to be the upper limit value and the lower limit value of the gradations for changing the display color sequentially. Then, the controller may maintain the gradation of the two laser light sources at either value of the set upper limit value (220) or the lower limit value (5) and also controls to change the gradation of the remaining one laser light source sequentially and continuously one gradation at a time within the range (range between 5 and 220) between the upper limit value and the lower limit value.

Moreover, one or more embodiments of the present invention illustrate a configuration where the display color of the predetermined information is changed sequentially in a predetermined case (when there is an instruction by the user or there is a change in the brightness of the background); however, the present invention is not limited thereto. One or more embodiments of the present invention may have a configuration so as to continuously change the display color of the predetermined information sequentially at all times regardless of the change in the brightness of the background.

Also, one or more embodiments of the present invention make it possible to detect a change in the brightness of the background based on either the on or off state of the wiper or headlights; the present invention, however, is not limited thereto. The present invention may be provided with an illumination sensor and detect a change in the brightness of the background by using the illumination sensor, or a change in the brightness of the background may be detected based on the present time.

Further, in the description above, examples are given in which the display color of the predetermined information is changed continuously and sequentially regardless of the background color; however, the present invention is not limited thereto. In the present invention, the display color of the predetermined information may be changed sequentially in steps regardless of the background color. In this case, for example, the display color of the predetermined information may be sequentially changed in steps by the four colors including two colors of the color system that are different from at least each other within the display within the displayable colors as the display color of the predetermined information.

Furthermore, in the description above, examples of a configuration provided with three laser light sources are given; however the present invention is not limited thereto. A configuration may be provided with two or four or more laser light sources in the present invention.

Also, in the description above, the laser light source is illustrated as an example of the light source of the present invention; however, the present invention is not limited thereto. A light source other than the laser light source may be the light source in the present invention.

In addition, in the description above, the process of the controller of the present invention is described with reference to a flow driven flowchart to perform the process in order according to the process flow for convenience of explanation; however the present invention is not limited thereto. In the present invention, the process operation of the controller may be performed by an event driven process that is performed for each event. In this case, it may be performed fully by an event driven process, or using a combination of an event driven process and a flow driven process. Furthermore, those of ordinary skill in the art would appreciate that certain "units" of one or more embodiments of the present invention may be implemented by a circuit, processor, etc. using known methods. Accordingly, the scope should be limited only by the attached claims.

### [Explanation of the Reference Numerals]

- 2: windshield (transparent display panel)
- 2a: transparent display panel
- 11: laser light scanner (projection unit)
- 13a, 13b, 13c: laser light source (light source)
- 17: main CPU (controller)
- 100, 100a: HUD device
- 300: predetermined information
- 400: background

## Claims

1. A head-up display device (100, 100a), comprising:
a projection unit (1) configured to project predetermined information (300) on a transparent display panel (2a) by superimposing on a background (400) that is viewed by a user through the transparent display panel (2a) placed in front of a line of sight of the user; and
a controller (17) configured to control a display of the predetermined information (300) while changing a display color of the predetermined information sequentially independent of a color of the background (400).

2. The head-up display device (100, 100a) according to claim 1, wherein the controller (17) controls the display of the predetermined information (300) while changing the display color of the predetermined information (300) in a continuous manner.

3. The head-up display device (100, 100a) according to claim 1 or 2, further comprising a plurality of light sources (13a, 13b, 13c) configured to emit lights projected on the transparent panel (2a) by the projection unit (1), wherein the controller (17) is configured to change the display color of the predetermined information (300) sequentially independent of the background color by using one of the plurality of light sources (13a, 13b, 13c) .

4. The head-up display device (100, 100a) according to any precedent claims, wherein the controller (17) is configured to control the display of the predetermined information (300) in a selected specific display color when the display color is selected by the user while changing the display color of the predetermined information (300) sequentially.

5. The head-up display device (100, 100a) according to any precedent claims, wherein the controller (17) initiates control to change the display color of the predetermined information (300) sequentially independent of the color of the background (400) based on a detection of change in a brightness of the background viewed by the user through the transparent display panel (12a).

6. The head-up display device (100, 100a) according to any precedent claims, further comprising a plurality of light sources (13a, 13b, 13c) configured to emit lights projected on the transparent display panel (2a) by the projection unit (1), wherein the controller (17) initiates control to change the display color of the predetermined information (300) sequentially independent of the background color when one of the plurality of light sources (13a, 13b, 13c) is no longer able to emit the desired light.

7. A display method of a head-up display device, comprising:
projecting predetermined information on a transparent display panel by superimposing on a background that is viewed by a user through the transparent display panel placed in front of the line of sight of the user; and
displaying the predetermined information while changing a display color of the predetermined information sequentially independent of the color of the background.

8. The display method of a head-up display device according to claim 7, further comprising:
controlling the displaying of the predetermined information while changing the display color of the predetermined information in a continuous manner.

9. The display method of a head-up display device according to claim 7, further comprising:
changing the display color of the predetermined information sequentially independent of the background color using one of a plurality of light sources of the head-up display device.

10. The display method of a head-up display device according to claim 7, further comprising:
controlling the display of the predetermined information in a selected specific display color when the display color is selected by the user while changing the display color of the predetermined information sequentially.

11. The display method of a head-up display device according to claim 7, further comprising:
initiating control to change the display color of the predetermined information sequentially independent of the color of the background based on a detection of change in a brightness of the background viewed by the user through the transparent display panel.

12. The display method of a head-up display device according to claim 7, further comprising:
initiating control to change the display color of the predetermined information sequentially independent of the background color when one of a plurality of light sources of the head-up display device is no longer able to emit the desired light.

13. The head-up display device (100, 100a) according to claim 1, wherein the controller (17) is configured to control the display of the predetermined information while changing the display color of the predetermined information (300) in a stepwise manner.
